# EUROPEAN PATENT SPECIFICATION

(11) **EP 0 687 591 B1**
(45) Date of publication and mention of the grant of the patent: **29.09.1999**
(21) Application number: 95108607.3
(22) Date of filing: 06.06.1995
(51) Int. Cl.: B60Q 3/04

(54) **An optical emergency indication system for motor vehicles**
Optische Warnverfahren für Kraftfahrzeuge
Système de signalisation optique d'urgence pour véhicule à moteur

(30) Priority: 17.06.1994 IT TO940133 U
(43) Date of publication of application: 20.12.1995
(73) Proprietor: FIAT AUTO S.p.A., 10135 Torino (IT)
(72) Inventor: Neytchev, Eugeniy, I-14033 Caglianetto (Asti) (IT); Pairetti, Bartolomeo, I-12032 Barge (Cuneo) (IT)
(74) Representative: Serra, Francesco

(56) References cited:
- GB-A- 1 034 348

## Description

The present invention relates to an optical emergency indication system for motor vehicles.

In motor vehicles there are always indicators (lamps) for indicating anomalies or malfunctions which may occur in the vehicle. Normally, when one of these anomalies occurs, the lamp is lit to indicate the anomaly to the driver.

However, since the driver is normally looking at the road along which he is travelling, he does not immediately see that the lamp is lit, particularly when the dashboard on which the lamp is situated is illuminated by direct sunlight and the lit lamp is somewhat difficult to see.

Since some of the messages given by the indicator lamps are of vital importance, for example, that of the lamp indicating breakdown of the ABS circuit or, in the case of more advanced systems in which there is a radar system for detecting a preceding vehicle, an indication of a danger of collision and therefore the need to act on the brake pedal immediately, they must be seen instantly. Various solutions have already been proposed for solving these problems, such as, the location of the display near to the centre of the field of vision - a so-called "head-up display" - the operation of a flashing signal in the driver's peripheral field of view, the use of auxiliary indicator lamps which warn the driver that a main indicator lamp is lit, or the use of sound signals.

However, all of these proposed systems have disadvantages; for example, a sound signal has been found to annoy or even frighten the driver, flashing lights are also annoying and, with regard to the use of auxiliary lights, they force the driver to take his attention away from the driving in order to identify the lamp which is lit.

The object of the present invention is to provide a system for effectively and quickly giving the driver an emergency message by combining the normal lighting of the lamp with an initial light pulse of increased intensity. The intensity and duration of the pulse are such as to ensure that it is seen effectively in the peripheral field of vision and does not cause dazzle.

In particular, the duration of the pulse is less than the time required for an eye movement. This prevents dazzle when the eyes are directed towards the lit lamp.

To achieve high light intensity values, the present invention proposes to direct the light pulse into a solid angle containing the driver's "head-motion box", that is, the space which the driver's head can normally occupy when he is driving.

The present invention achieves the aforementioned objects by means of an optical emergency indication system for motor vehicles, having the specific characteristics recited in the following claims.

The present invention will now be described purely by way of non-limiting example, with reference to the appended drawings, in which:
Figure 1 is a schematic view of a motor-vehicle dashboard having indicator lamps,
Figure 2 is a schematic view of the system according to the invention, and
Figure 3 shows the characteristic waveforms of some components of the system according to the invention.

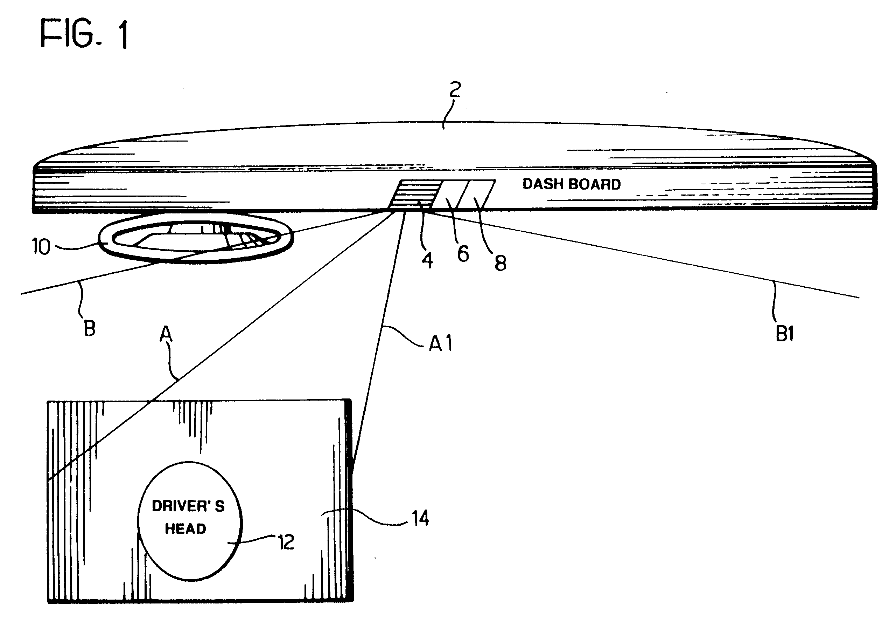

With reference to Figure 1, the dashboard of a motor vehicle (not shown) is indicated 2 and indicator lamps on the dashboard are schematically indicated 4, 6 and 8.

The steering wheel is schematically indicated 10, the driver's head is schematically indicated 12, and the so-called "head-motion box" which, as stated, is the space which the driver's head can occupy when he is driving, is indicated 14.

The solid angle B-B₁ is the solid angle containing the light emitted by the indicator lamp 4 when it is lit according to the prior art and the solid angle A-A₁ is that which contains the light emitted by the indicator lamp 4 when it is activated according to the invention.

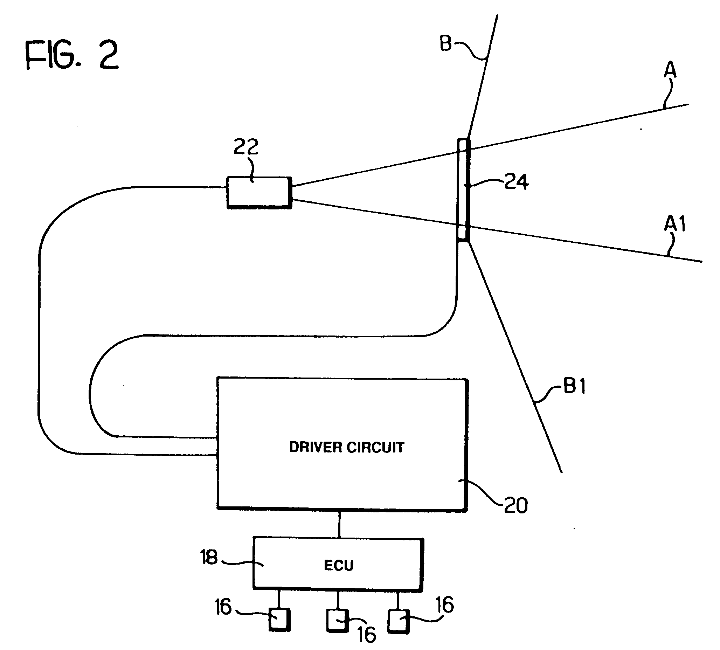

With reference now to Figure 2, sensors present in the motor car for indicating anomalies in basic parts of the motor car are indicated 16. The sensors 16 are connected to a central processing unit 18 connected to a driver circuit 20 which sends its signals to a lighting device 22 (for example an LED) and to a diffusor 24, the composition of which will be described below.

The light emitted by the emitter 22 is spread by the diffusor 24 over the solid angle B-B₁ in normal conditions and over the solid angle A-A₁ in emergency conditions, in accordance with the system according to the invention.

The diffusor 24 is a PDLC (polymer dispersed liquid crystal) diffusor which has the characteristic of allowing the light to be diffused normally, that is, over the solid angle B-B₁ when the liquid crystals are in the non-energized condition, whereas it has the characteristic of restricting the solid angle in which the light is diffused to the angle A-A₁ when the liquid crystals are energized.

In use, when one of the sensors 16 indicates to the electronic control unit 18 a malfunction of a device monitored thereby, the electronic control unit 18 sends this information to the driver circuit 20 which causes the emitter 22 to be supplied in a manner such that it emits a light beam of an intensity much greater than its normal intensity and, at the same time, the driver circuit 20 sends an excitation signal to the diffusor 24, energizing the liquid crystals and thus arranging the diffusor to transmit the light beam coming from the lighting device 22 in the solid angle A-A₁. The driver of the vehicle thus has a momentary impression of intense illumination like a "flash of light" which is certain to be intercepted by his eyes since it is emitted in the solid angle A-A₁ which covers the whole of the region in which the driver's head can be situated when he is driving.

After about 100-300 ms, the driver circuit 20 deenergizes the liquid crystals of the diffusor 24 and, at the same time, reduces the light intensity of the emitter 22 to its normal value.

The driver of the vehicle thus has the impression that an indicator lamp is lit and therefore turns his eyes towards the dashboard where he will see the lamp in question lit normally and will take the necessary measures.

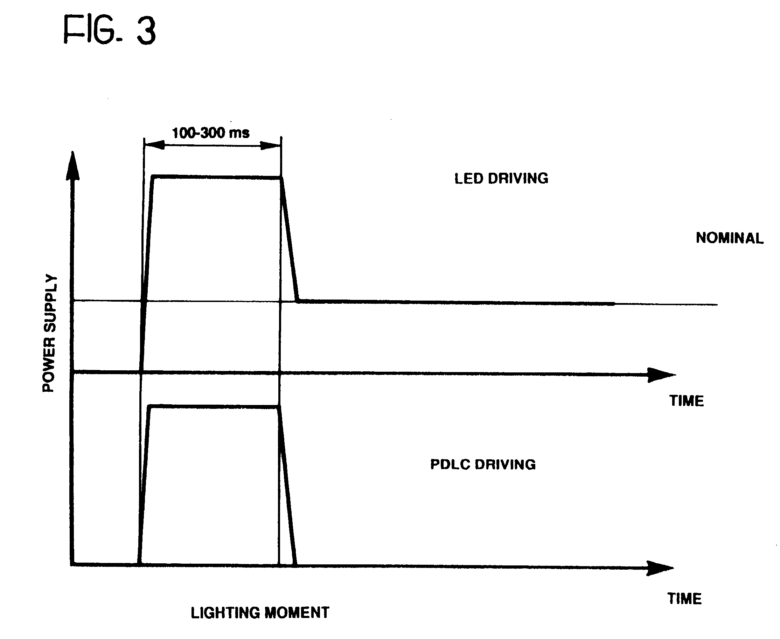

With reference to Figure 3, it can be seen that the moment when the indicator lamp is lit corresponds to the supply of the PDLC diffusor and to a simultaneous intense emission of light by the LED. After about 100-300 ms, the driving of the PDLC is stopped and, at the same time, the light intensity of the LED is reduced to its nominal value.

Naturally, the principle of the invention remaining the same, the forms of embodiment and details of construction may be varied widely without thereby departing from the scope of the present invention as claimed.

For example, the LED may be replaced by a pair of LEDs of different colours, one for "normal" indication and the other for the initial "flash".

Provision may also be made for the "flash" to be repeated at regular and close intervals, for example, if the emergency signal relates to an imminent collision, until the driver of the vehicle operates the brakes.

The LEDs may be replaced by a lamp with or without reflectors and the timing of the duration of the "flash" may be varied widely.

## Claims

1. An optical emergency indication system for motor vehicles, comprising:
- a plurality of sensor means (16) for detecting malfunctions of devices in the motor vehicle,
- a plurality of indicator means (4, 6, 8) associated with the sensor means (16) for indicating malfunctions of the devices to the driver of the vehicle,
- a plurality of light means (22) associated with the indicator means (4, 6, 8) for lighting the indicator means,
- a driver circuit (20) which can receive and recognize the malfunction signals coming from the sensors (16) and activate the light means (22) associated with the indicator means (4, 6, 8) corresponding to the device the malfunctioning of which is to be indicated,
characterized in that it comprises:
- a plurality of diffusor means (24) associated with those indicator means (4, 6, 8) of the plurality of indicator means (4, 6, 8) to which attention is to be drawn in particular, the diffusor means (24) being connected to the driver circuit (20), the driver circuit (20) being arranged, after the recognition of a signal corresponding to a malfunction to which attention is to be drawn in particular, to activate the corresponding light means (22) with a current peak for a predetermined period of time and simultaneously to activate the associated diffusor means (24) so that the luminous intensity of the light means (22) is increased and the solid angle of propagation of the light emitted by the light means (22) is reduced.

2. An optical indication system according to Claim 1, characterized in that the driver circuit (20) is arranged to cut off the current peak, bringing the light emitted by the illuminator means (22) to its normal intensity, and simultaneously to de-activate the associated diffusor means (24) after a predetermined period of time.

3. A system according to Claims 1 and 2, characterized in that the light means (22) comprise at least one LED.

4. A system according to Claims 1 and 2, characterized in that the light means (22) comprise a lamp.

5. A system according to Claims 1 and 2, characterized in that the light means (22) comprise a lamp associated with a reflector.

6. A system according to any one of the preceding claims, characterized in that the diffusor means (24) comprise PDLC liquid crystal circuits.

## Patentansprüche

1. Optisches Notfall-Anzeigesystem für Kraftfahrzeuge, wobei das System enthält:
- eine Vielzahl von Fühlereinrichtungen (16), um Funktionsstörungen von Vorrichtungen im Kraftfahrzeug abzutasten,
- eine Vielzahl von Anzeigeeinrichtungen (4, 6, 8), die den Fühlereinrichtungen (16) Zugeordnet sind, um dem Lenker des Fahrzeugs Funktionsstörungen von Vorrichtungen anzuzeigen,
- eine Vielzahl von Lichtquellen (22), die den Anzeigeeinrichtungen (4, 6, 8) zugeordnet sind, um die Anzeigeeinrichtungen zum Leuchten zu bringen,
- eine Treiberstufe (20), die die von den Fühlern (16) stammenden Funktionsstörungssignale empfangen und erkennen sowie die Lichtquelle (22) in Betrieb setzen kann, die der Anzeigeeinrichtung (4, 6, 8) zugeordnet ist, die jener Vorrichtung entspricht, deren Funktionsstörung angezeigt werden soll,
dadurch gekennzeichnet, dass das System enthält:
- eine Vielzahl von Lichtdiffusor-Einrichtungen (24), die jenen Anzeigeeinrichtungen (4, 6, 8) aus der Vielzahl von Anzeigeeinrichtungen (4, 6, 8) zugeordnet sind, auf die eine besondere Aufmerksamkeit gerichtet werden soll, wobei die Lichtdiffusor-Einrichtungen (24) mit der Treiberstufe (20) verbunden sind, wobei die Treiberstufe (20) so aufgebaut ist, dass sie nach dem Erkennen eines Signals, das einer Funktionsstörung entspricht, auf die besondere Aufmerksamkeit gerichtet werden soll, die entsprechende Lichtquelle (22) für ein bestimmtes Zeitintervall mit einer Stromspitze in Betrieb setzt und gleichzeitig die zugeordnete Lichtdiffusor-Einrichtung (24) so in Betrieb setzt, dass die Lichtstärke der Lichtquelle (22) erhöht und der Raumwinkel für die Ausbreitung jenes Lichts verkleinert wird, das die Lichtquelle (22) aussendet.

2. Optisches Anzeigesystem gemäß Anspruch 1, dadurch gekennzeichnet, dass die Treiberstufe (20) so aufgebaut ist, um nach einem vorgegebenen Zeitintervall die Stromspitze abzuschneiden, das von der Lichtquelle (22) ausgesandte Licht auf seine normale Stärke zu bringen und gleichzeitig die zugeordnete Lichtdiffusor-Einrichtung (24) außer Betrieb zu setzen.

3. System gemäß Anspruch 1 und 2, dadurch gekennzeichnet, dass die Lichtquelle (22) zumindest eine LED enthält.

4. System gemäß Anspruch 1 und 2, dadurch gekennzeichnet, dass die Lichtquelle (22) eine Lampe enthält.

5. System gemäß Anspruch 1 und 2, dadurch gekennzeichnet, dass die Lichtquelle (22) eine Lampe enthält, der ein Reflektor zugeordnet ist.

6. System gemäß irgendeinem der bisherigen Ansprüche, dadurch gekennzeichnet, dass die Lichtdiffusor-Einrichtung (24) Schaltkreise mit PDLC-Flüssigkristallen enthält.

## Revendications

1. Système indicateur optique d'urgence pour véhicules automobiles, comprenant:
- une pluralité de moyens formant capteurs (16) pour détecter des défauts de fonctionnement de dispositifs dans le véhicule automobile,
- une pluralité de moyens indicateurs (4, 6, 8) associés aux moyens formant capteurs (16) pour indiquer des défauts de fonctionnement du dispositif au conducteur du véhicule,
- une pluralité de moyens d'éclairement (22) associés aux moyens indicateurs (4, 6, 8) pour éclairer les moyens indicateurs,
- un circuit de commande (20) qui peut recevoir et identifier des signaux de défauts de fonctionnement provenant des capteurs (16) et activer les moyens d'éclairement (22) associés aux moyens indicateurs (4, 6, 8) correspondant au dispositif, dont le défaut de fonctionnement doit être indiqué,
caractérisé en ce qu'il comprend:
- une pluralité de moyens diffuseurs (24) associés aux moyens indicateurs (4, 6, 8) de la pluralité de moyens indicateurs (4, 6, 8), sur lesquels l'attention doit être attirée en particulier, les moyens diffuseurs (24) étant connectés au circuit de commande (20), le circuit de commande (20) étant agencé pour, après l'identification d'un signal correspondant à un défaut de fonctionnement sur lequel l'attention doit être attirée en particulier, activer les moyens d'éclairement correspondants (22) avec un pic de courant pendant l'intervalle de temps prédéterminé et simultanément activer les moyens diffuseurs associés (24) de manière que l'intensité lumineuse des moyens d'éclairement (22) soit accrue et que l'angle solide de propagation de la lumière émise par les moyens d'éclairement (22) soit réduite.

2. Système indicateur optique selon la revendi-cation 1, caractérisé en ce que le circuit de commande (20) est agencé de manière à interrompre le pic de courant, ce qui amène la lumière émise par les moyens d'éclairement (22) à son intensité normale, et désactiver simultanément les moyens diffuseurs associés (24) au bout d'un intervalle de temps prédéterminé.

3. Système indicateur optique selon les revendi-cations 1 et 2, caractérisé en ce que les moyens d'éclairement (22) comprennent au moins une diode LED.

4. Système selon les revendications 1 et 2, caractérisé en ce que les moyens d'éclairement (22) comprennent une lampe.

5. Système selon les revendications 1 et 2, caractérisé en ce que les moyens d'éclairement (22) comprennent une lampe associée à un réflecteur.

6. Système selon l'une quelconque des revendi-cations précédentes, caractérisé en ce que les moyens diffuseurs (24) Comprennent des circuits à cristal liquide PDLC.
